# EUROPÄISCHE PATENTANMELDUNG

(11) **EP 3 785 786 A1**
(43) Veröffentlichungstag der Anmeldung: **03.03.2021**
(21) Anmeldenummer: 19194387.7
(22) Anmeldetag: 29.08.2019
(51) Int. Cl.: B01D 46/00

(54) **VERFAHREN ZUR VORHERSAGE DER STANDZEIT EINES FILTERS**

(71) Anmelder: Carl Freudenberg KG, 69469 Weinheim (DE)
(72) Erfinder: Caesar, Thomas, Dr., 69469 Weinheim (DE); Schulz, Karsten, 74924 Neckarbischofsheim (DE); Weber, Patrick, 69469 Weinheim (DE); Schroth, Thomas, 67240 Bobenheim-Roxheim (DE); Sell-Poelloth, Sandra, 67487 Maikammer (DE); Tapper, Renate, 64625 Bensheim (DE)

(57) **Zusammenfassung**

Die Erfindung betrifft ein Verfahren zur Vorhersage der Standzeit eines Filters (1) in einer Anlage (10), ein Computerprogramm zur Durchführung des Verfahrens und ein System zur Vorhersage der Standzeit des Filters (1).

Erfindungsgemäß wurde als vorteilhaft erkannt, Daten des Filtermoduls, der Anlage und der Luft zur Vorhersage der Standzeit zu verwenden.

Dadurch wird eine bessere Vorhersage der Standzeit eines Filters ermöglicht und die Gesamtleistung der Anlage erhöht.

## Beschreibung

Die Erfindung betrifft ein Verfahren zur Vorhersage der Standzeit eines Filters gemäß dem Anspruch 1, ein Computerprogramm zur Durchführung des Verfahren gemäß Anspruch 14 und ein System zur Vorhersage der Standzeit gemäß Anspruch 15.

### Stand der Technik

Aus dem Stand der Technik ist es bekannt, dass unterschiedlichste Systeme, in welchen Prozesse ablaufen, einen bestimmten Luftbedarf haben. So können beispielsweise Anlagen zur Energieerzeugung einen gewissen Bedarf an Prozesszuluft haben. Dieser Bedarf umfasst dabei üblicher Weise eine bestimmte Luftmenge als auch eine bestimmte Luftqualität. Aus diesem Grund kommen Filtermodule mit Filterelementen zum Einsatz. Die Filterelemente können beispielsweise als Oberflächenfilter, Hochtemperaturfilter oder Taschenfilter ausgeführt sein. Ein Filtermodul umfasst dabei häufig mehrere Filterstufen, d.h. Filterelemente, welche z.B. in Reihe angeordnet sind.

Filterelemente werden in der Regel dann gewechselt, wenn die Filtrationsleistung nicht mehr den Anforderungen genügt, d.h. die Prozessluft nicht mehr in ausreichender Qualität bereitgestellt werden kann. Alternativ werden Filter prophylaktisch gewechselt, um einem Nichtgenügen der Filtrationsleistung zuvorzukommen. Filtrationsleistung in diesem Zusammenhang meint nicht unbedingt nur eine ungenügende Reinigung der Luft, sondern kann auch bedeuten, dass z.B. ein Ventilator in einer Anlage durch den Druckanstieg nicht mehr ausreichend Luft fördern kann oder der Wirkungsgrad einer Turbine in einer Anlage schlechter und die Anlage deshalb unwirtschaftlich wird. Der Wechsel der Filterelemente bedingt in beiden Fällen eine Abschaltung und Stillstandzeit der Anlage, was sich negativ auf die Gesamtleistung der Anlage auswirkt. Das Herunterfahren und nachfolgende Hochfahren der Anlage bedarf zusätzlicher Energie, was sich ebenfalls nachteilig auf die aktuell bereitgestellte Leistung der Anlage auswirkt. Wenn die Lebensdauer eines Filters besser ausgereizt und ein erforderlicher Filterwechsel zeitlich genauer geplant werden kann, kann der Filterwechsel in einen Zeitkorridor gelegt werden, in welchem die Anlage aus anderen Gründen Stillstandzeiten hat oder zumindest nur mit geringer Leistung eingeplant ist.

### Aufgabenstellung

Aufgabe der vorliegenden Erfindung ist es eine bessere Vorhersage der Standzeit eines Filters zu ermöglichen, um Instandhaltungsarbeiten zum Austausch von Filtern besser planen zu können. Weitere Aufgabe ist es, so die Gesamtleistung der Anlage zu erhöhen.

### Technische Lösung

Gelöst wird diese Aufgabe durch ein Verfahren zur Vorhersage der Standzeit eines Filters mit den Merkmalen von Anspruch 1.

Erfindungsgemäß wurde als vorteilhaft erkannt Daten des Filtermoduls, der Anlage und der Luft zur Vorhersage der Standzeit zu verwenden.

Das erfindungsgemäße computerimplementierte Verfahren dient zur Vorhersage der Standzeit eines Filterelements eines Filtermoduls in einer Anlage, wobei das Filterelement zur Reinigung von Luft dient, mit folgenden Schritten:
a) Abrufen von Charakterisierungsdaten der Anlage aus einer Datenbank
b) Abrufen von Charakterisierungsdaten des Filterelements aus einer Datenbank
c) Abrufen von mittels Sensorik in der Anlage erfassten Messdaten der Anlage
d) Abrufen von mittels Sensorik in dem Filtermodul erfassten Messdaten des Filterelements
e) Abrufen von Messdaten der zu reinigenden Luft
f) Erstellen eines Datenmodells aus den vorgenannten und zuvor abgerufenen Daten und Bestimmung, d.h. Berechnung der zu erwartenden Standzeit des Filterelements, jeweils in einer Recheneinheit. Die Erstellung des Datenmodells und Bestimmung der Standzeit erfolgt unter Verwendung einer auf der Recheneinheit ausgeführten Software mit in dieser Software hinterlegten Algorithmen und Rechenregeln.

Dank der Bestimmung einer Vorhersage der Standzeit eines jeweiligen Filterelements kann das Filterelement länger genutzt werden und muss nicht mehr prophylaktisch gewechselt werden. Dadurch können in vorteilhafter Weise Ressourcen geschont werden.

Auch wird eine Verlegung der Instandhaltung des Filterelements in sowieso geplante Stillstandzeiten ermöglicht, welche möglichst zeitnah zur maximalen Standzeit des Filterelements liegen. So können Stillstandzeiten der Anlage reduziert und begrenzt werden, was eine höhere Gesamtleistung der Anlage bewirkt.

Die Bestimmung einer Vorhersage der Standzeit eines jeweiligen Filterelements kann kontinuierlich erfolgen, derart, dass immer ein aktueller Vorhersagewert berechnet wird. Alternativ können die Daten auch gesammelt werden und eine Vorhersage der Standzeit eines jeweiligen Filterelements kann in regelmäßigen Zeitabständen erfolgen, beispielsweise tagesaktuell.

In Weiterbildung des Verfahrens wird das Abrufen der Daten unter Verwendung einer datenübertragungstechnischen Verbindung, also einer Kommunikationsverbindung, (beispielsweise kabelgebunden, über Funk, über das Internet, mittels loT-Integration der Komponenten) durch einen Remote-Server durchgeführt. Remote Server meint, dass dieser Server nicht direkt am Ort der Anlage aufgestellt ist. In anderen Worten: die Anlage, verwendete Datenbanken und die Recheneinheit können räumlich getrennt sein. Die Recheneinheit kann Teil des Remote-Servers sein.

In besonders vorteilhafter und daher bevorzugter Weiterbildung des Verfahrens werden im Schritt "Abrufen von Messdaten der Anlage" zusätzlich aus der Steuerung der Anlage Vorhersagedaten der Anlage abgerufen.

Es wurde als vorteilhaft gefunden, wenn im Schritt "Abrufen von Messdaten der zu reinigenden Luft" zusätzlich aus datenübertragungstechnisch verknüpften Meteorologie-Datenbanken Vorhersagedaten der zu reinigenden Luft abgerufen werden.

In besonders vorteilhafter und daher bevorzugter Weiterbildung des Verfahrens können im Schritt "Erstellen eines Datenmodells und Bestimmung der Standzeit" Erfahrungswerte von vergleichbaren Filterelementen und/ oder vergleichbaren Anlagen einfließen.

Das Verfahren könnte einen zusätzlichen Schritt aufweisen: Ausgabe der zu erwartenden Standzeit des Filterelements über eine Schnittstelle an einen Benutzer oder an die Steuerung der Anlage und/oder Ausgabe einer Bestellanforderung eines auszutauschenden Filterelements an einen Online-Shop. Dadurch wird Predictive Maintenance, also eine vorausschauende Wartung des Filtermoduls ermöglicht.

Je umfassender die Datengrundlage ist, welche in das Datenmodell zur Bestimmung der Standzeit einfließt, desto mehr wird die Genauigkeit der Vorhersage erhöht.

Die nachfolgenden Daten wurden als besonders aussagekräftig und relevant identifiziert, weshalb deren Berücksichtigung - einzeln oder kumulativ - als vorteilhaft erscheint:
als Charakterisierungsdaten der Anlage die Art (insbes. Art der Luftführung, wie Zuluft, Abluft, Umluft, Veränderlichkeit), den Aufbau (insbesondere die Schaltung mehrerer Filtermodule in mehreren Filterstufen, das Vorhandensein von Wetterschutzeinrichtungen, Be- oder Entfeuchtern, Wärmetauschern und Ventilatoren
- als Charakterisierungsdaten des Filterelements die Filterausstattung (z.B. vorhandene Partikel- und Gasfilterlagen) und Filterkennzahlen (wie beispielsweise die Anfangsdruckdifferenz, den Druckdifferenzverlauf und Fraktionsabscheidegrade für PM₁₀, PM₂,₅, PM₁ oder gesamt)
- als Messdaten der Anlage die Betriebszeiten und/oder den Luftbedarf (insbesondere unter Angabe des Volumenstroms) und evtl. von Temperatur, Feuchte oder Vibrationen in der Anlage
- als Messdaten des Filterelements den Filterzustand (z.B. die aktuelle Druckdifferenz, Beladung oder mikrobielle Belastung), wobei die Sensorik dazu beispielsweise Druckdifferenzsensoren oder optische Sensoren aufweisen kann
- als Messdaten der zu reinigenden Luft deren Temperatur, deren Feuchte, deren Partikelbelastung, die Konzentration von Gasen und/oder die Ausprägung von Wind (inkl. der Windrichtung und der Windstärke), wobei die Sensorik dazu beispielsweise Feuchtigkeits- und Temperatursensoren oder Windmesser (Anemometer) und Windrichtungsgeber aufweisen kann
- als Vorhersagedaten der Anlage geplante Betriebszeiten und/oder die Leistungsplanung der Anlage und sich daraus ergebende Luftbedarfe
- als Vorhersagedaten der zu reinigenden Luft Wettervorhersagedaten, Pollenflugvorhersagedaten und/oder jahreszeitliche und lokale Erfahrungswerte (z.B. Feinstaubbelastung an Silvester und Neujahr in weiten Teilen Deutschlands)

Die Erfindung betrifft auch ein Computerprogramm mit Programmcodemitteln, um alle Verfahrensschritte des vorstehend beschriebenen Verfahrens auszuführen, wenn das Computerprogramm auf einer Recheneinheit ausgeführt wird.

Die Erfindung betrifft auch ein System zur Vorhersage der Standzeit eines Filterelements eines Filtermoduls, zur Durchführung der Verfahrensschritte nach dem obenstehend beschriebenen Verfahren, und weist folgende Komponenten auf:
- eine Anlage mit einem Filtermodul mit mindestens einem Filterelement zur Reinigung von Luft,
- mind. eine Datenbank in welcher Charakterisierungsdaten der Anlage und Charakterisierungsdaten des Filterelements hinterlegt sind,
- mindestens einen Sensor zum Erfassen von Messdaten der Anlage
- mindestens einen Sensor zum Erfassen von Messdaten der Luft S4 und
- mindestens einen Sensor zum Erfassen von Messdaten des Filterelements,
- einen Server mit einer Recheneinheit zum Abrufen der Messdaten und Erstellen eines Datenmodells aus den Daten und Bestimmung der zu erwartenden Standzeit des Filterelements
- evtl. eine Ausgabeeinheit zur Ausgabe der zu erwartenden Standzeit des Filterelements.

Der mindestens eine Sensor zum Erfassen von Messdaten der Anlage kann in der Anlage positioniert sein. Der mindestens eine Sensor zum Erfassen von Messdaten des Filterelements kann in dem Filtermodul positioniert sein. Alternativ ist es jedoch auch möglich, dass ein Sensor Messdaten liefert, welche sowohl zum Erfassen von Messdaten des Filterelements als auch zum Erfassen von Messdaten der Anlage verwendet werden. Entscheidend ist also nicht die lokale Positionierung eines Sensors sondern seine Funktionalität. Denkbar ist beispielsweise eine am Filtermodul gemessene Druckdifferenz auch zur Bestimmung der Betriebszeit der Anlage zu verwenden. Zur Erhöhung der Genauigkeit der Bestimmung der zu erwartenden Standzeit des Filterelements können auch jeweils eine Mehrzahl von Sensoren eingesetzt werden.

Unter einem Sensor wird in dieser Anmeldung die Messeinheit zur Bestimmung einer Messgröße verstanden. So können z.B. in einer Wetterstation mit 6 Sensoren auch 6 unterschiedliche Messgrößen erfasst werden. Der Sensor umfasst nach diesem Verständnis nicht nur die Einheit, in welcher ein physikalischer oder chemischer Effekt erfasst wird (Aufnehmer), sondern umfasst auch die Aufbereitungseinheit, welchen diesen gemessenen Effekt in ein weiterverarbeitbares elektrisches Signal wandelt.

Vorteilhafte Weiterbildungen des Systems ergeben sich aus der vorstehenden Beschreibung des Verfahrens und von dessen möglichen Ausgestaltungen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: ein System zur Vorhersage der Standzeit eines Filters
- Fig. 2: ein Ablaufdiagramm eines Verfahrens zur Vorhersage der Standzeit eines Filters

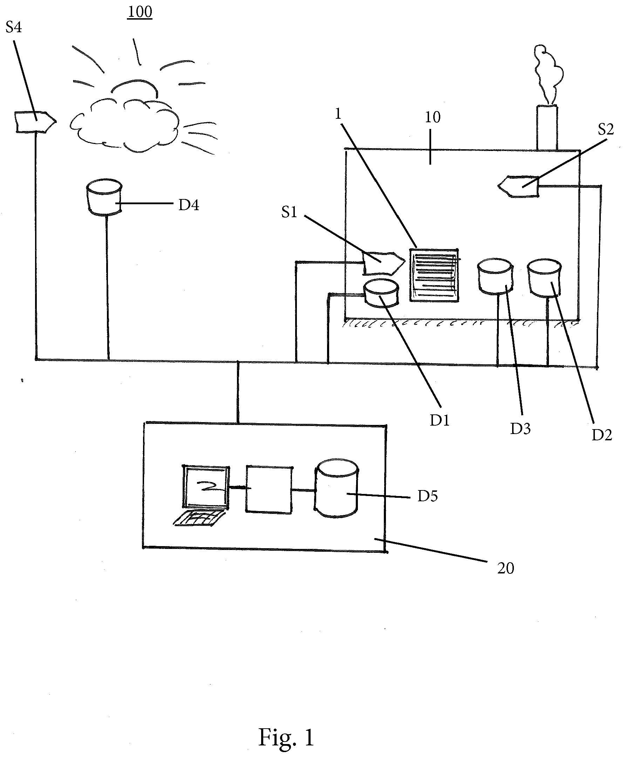

Fig.1 zeigt ein System zur Vorhersage der Standzeit eines Filterelements eines Filtermoduls 1 in einer Anlage 10.

Das System weist folgende Komponenten auf:
- eine Anlage 10 mit einem Filtermodul 1 mit mindestens einem Filterelement zur Reinigung von Luft,
- eine Datenbank in welcher Charakterisierungsdaten der Anlage D2 und Charakterisierungsdaten des Filterelements D1 hinterlegt sind,
- mindestens einen Sensor in der Anlage zum Erfassen von Messdaten der Anlage S2
- mindestens einen Sensor zum Erfassen von Messdaten der Luft (S4) und
- mindestens einen Sensor in dem Filtermodul zum Erfassen von Messdaten des Filterelements S1,
- einen Server 20 zum Abrufen der Messdaten und Erstellen eines Datenmodells aus den Daten und Bestimmung, nämlich Berechnung, der zu erwartenden Standzeit des Filterelements. Bei der Bestimmung kann der Server 20 auch auf ein Datenmodell aus Erfahrungswerten D5 von vergleichbaren Filtern und Anlagen zurückgreifen.

Zusätzlich zu Messdaten und Charakterisierungsdaten können auch noch Vorhersagedaten der Anlage D3 und Vorhersagedaten der Luft D4 in das Datenmodell mit einfließen.

Die verschiedenen Datenbanken und der Server 20 können jeweils räumlich getrennt oder vereint sein. Wichtig ist nur, dass der Server 20 Zugriff auf alle erforderlichen Datenbanken hat.

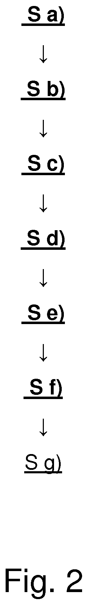

Das im Ablaufdiagramm von Fig. 2 dargestellte Verfahren dient zur Vorhersage der Standzeit eines Filterelements eines Filtermoduls 1 in einer Anlage 10, wobei das Filterelement zur Reinigung von Luft dient, mit folgenden Schritten:
S a) Abrufen von Charakterisierungsdaten D2 der Anlage 10 aus einer Datenbank
S b) Abrufen von Charakterisierungsdaten des Filterelements D1 aus einer Datenbank
S c) Abrufen von mittels Sensorik in der Anlage erfassten Messdaten der Anlage S2 und evtl. von Vorhersagedaten der Anlage D3
S d) Abrufen von mittels Sensorik in dem Filtermodul erfassten Messdaten des Filterelements S1
S e) Abrufen von Messdaten der zu reinigenden Luft S4 und evtl. von Vorhersagedaten der zu reinigenden Luft D4
S f) Erstellen eines Datenmodells aus den vorgenannten Daten und Bestimmung, d.h. Berechnung der zu erwartenden Standzeit des Filterelements.

Das Verfahren könnte einen zusätzlichen Schritt S g) aufweisen:
Ausgabe der zu erwartenden Standzeit des Filterelements über eine Schnittstelle an einen Benutzer oder an die Steuerung der Anlage und/oder Ausgabe einer Bestellanforderung eines auszutauschenden Filterelements an einen Online-Shop.

### Bezugszeichenliste

- 1: Filtermodul mit Filterelementen
- 10: Anlage
- 20: Server mit Recheneinheit und Ausgabeeinheit
- 100: Umgebung

- D1: Charakterisierungsdaten Filtermodul
- D2: Charakterisierungsdaten Anlage
- D3: Vorhersagedaten Anlage
- D4: Vorhersagedaten Luft
- D5: Datenmodell aus Erfahrungswerten

- S1: Messdaten Filtermodul
- S2: Messdaten Anlage
- S4: Messdaten Luft

## Patentansprüche

1. Verfahren zur Vorhersage der Standzeit eines Filterelements eines Filtermoduls (1) in einer Anlage (10), wobei das Filterelement zur Reinigung von Luft dient, mit folgenden Schritten:
a) Abrufen von Charakterisierungsdaten der Anlage (D2) aus einer Datenbank
b) Abrufen von Charakterisierungsdaten des Filterelements (D1) aus einer Datenbank
c) Abrufen von mittels Sensorik in der Anlage erfassten Messdaten der Anlage (S2)
d) Abrufen von mittels Sensorik in dem Filtermodul erfassten Messdaten des Filterelements (S1)
e) Abrufen von Messdaten der zu reinigenden Luft (S4)
f) Erstellen eines Datenmodells aus den Daten und Bestimmung der zu erwartenden Standzeit des Filterelements.

2. Verfahren nach Anspruch 1,
wobei das Abrufen der Daten unter Verwendung einer datenübertragungstechnischen Verbindung durch einen Remote-Server durchgeführt wird.

3. Verfahren nach einem der vorangehenden Ansprüche,
wobei in Schritt c) zusätzlich aus der Steuerung der Anlage Vorhersagedaten der Anlage (D3) abgerufen werden.

4. Verfahren nach einem der vorangehenden Ansprüche,
wobei in Schritt e) zusätzlich aus Meteorologie-Datenbanken Vorhersagedaten der zu reinigenden Luft (D4) abgerufen werden.

5. Verfahren nach einem der vorangehenden Ansprüche,
wobei in Schritt f) Erfahrungswerte von vergleichbaren Filterelementen (1) und/oder Anlagen (10) einfließen.

6. Verfahren nach einem der vorangehenden Ansprüche mit dem zusätzlichen Schritt
g) Ausgabe der zu erwartenden Standzeit des Filterelements (1) über eine Schnittstelle an einen Benutzer oder an die Steuerung der Anlage (10) und/oder Ausgabe einer Bestellanforderung eines auszutauschenden Filterelements (1) an einen Online-Shop.

7. Verfahren nach einem der vorangehenden Ansprüche,
wobei die Charakterisierungsdaten der Anlage (D2), die Art, den Aufbau und/oder die Lage der Anlage umfassen.

8. Verfahren nach einem der vorangehenden Ansprüche,
wobei die Charakterisierungsdaten des Filterelements (D1) die Filterausstattung und Filterkennzahlen umfassen.

9. Verfahren nach einem der vorangehenden Ansprüche,
wobei die Messdaten der Anlage (S2) die Betriebszeiten und/oder den Luftbedarf umfassen.

10. Verfahren nach einem der vorangehenden Ansprüche,
wobei die Messdaten des Filterelements (S1) den Filterzustand umfassen.

11. Verfahren nach einem der vorangehenden Ansprüche,
wobei die Messdaten der zu reinigenden Luft (S4) die Temperatur, die Feuchte, die Partikelbelastung, die Konzentration von Gasen und/oder die Ausprägung von Wind umfassen.

12. Verfahren nach einem der vorangehenden Ansprüche,
wobei die Vorhersagedaten der Anlage (D3) geplante Betriebszeiten und/oder geplante Luftbedarfe umfassen.

13. Verfahren nach einem der vorangehenden Ansprüche,
wobei die Vorhersagedaten der zu reinigenden Luft (D4) Wettervorhersagedaten, Pollenflugvorhersagedaten und/oder jahreszeitliche Erfahrungswerte umfassen.

14. Computerprogramm mit Programmcodemitteln, um alle Verfahrensschritte nach einem der Ansprüche 1 bis 13 durchzuführen, wenn das Computerprogramm auf einer Recheneinheit ausgeführt wird.

15. System zur Vorhersage der Standzeit eines Filterelements eines Filtermoduls (1), zur Durchführung der Verfahrensschritte nach einem der Ansprüche 1 bis 13, welches aufweist:
- eine Anlage (10) mit mindestens einem Filtermodul mit mindestens einem Filterelement (1) zur Reinigung von Luft,
- eine Datenbank in welcher Charakterisierungsdaten der Anlage (D2) und Charakterisierungsdaten des Filterelements (D1) hinterlegt sind,
- mindestens ein Sensor zum Erfassen von Messdaten der Anlage (S2)
- mindestens ein Sensor zum Erfassen von Messdaten der Luft (S4) und
- mindestens ein Sensor zum Erfassen von Messdaten des Filterelements (S1),
- einen Server (20) mit Recheneinheit zum Abrufen der Messdaten und Erstellen eines Datenmodells aus den Daten und Bestimmung der zu erwartenden Standzeit des Filterelements (1).
